# EUROPÄISCHE PATENTSCHRIFT

(11) **EP 2 287 592 B1**
(45) Veröffentlichungstag und Bekanntmachung des Hinweises auf die Patenterteilung: **12.11.2014**
(21) Anmeldenummer: 09010782.2
(22) Anmeldetag: 22.08.2009
(51) Int. Cl.: G02B 6/293, G02B 6/12, G01N 21/77, G01N 21/55

(54) **Mikrooptisches Bauelement mit einem mikrofluidischen Kanal und Verfahren zu dessen Herstellung**
Micro-optical construction element with microfluidic channel and method for its manufacturing
Composant micro-optique avec un canal microfluidique et son procédé de fabrication

(43) Veröffentlichungstag der Anmeldung: 23.02.2011
(73) Patentinhaber: Karlsruher Institut für Technologie, 76131 Karlsruhe (DE)
(72) Erfinder: Grossmann, Tobias, 76131 Karsruhe (DE); Hauser, Mario, 76646 Bruchsal (DE); Beck, Torsten, 76131 Karlsruhe (DE); Kalt, Heinz Prof., 76297 Stutensee (DE); Vannahme, Christoph, 76139 Karlsruhe (DE); Mappes, Timo Dr., 76135 Karlsruhe (DE)
(74) Vertreter: Gärtner, Stephan

(56) Entgegenhaltungen:
- WO-A-02/08815
- WO-A-2005/019798
- WO-A-2006/108096
- US-A- 5 663 790
- US-A1- 2005 013 529
- US-A1- 2005 162 656
- US-A1- 2007 237 460
- US-A1- 2007 269 901
- AM ARMANI, RP KULKARNI, SE FRASER, RC FLAGAN, KJ VAHALA: "Label-free, single-molecule detection with optical microcavities" SCIENCE, Bd. 317, 10. August 2007 (2007-08-10), Seiten 783-787, XP002566438

## Beschreibung

Die Erfindung betrifft ein mikrooptisches Bauelement zur Ankopplung von Laserlicht an Mikroresonatoren und ein Verfahren zu seiner Herstellung.

Die Möglichkeit der Ankopplung von Laserlicht an einzelne Mikroresonatoren besitzt im Hinblick auf den Einsatz der Mikroresonatoren als Detektoren eine wichtige Bedeutung. A. M. Armani, R. P. Kulkarni, S. E. Fraser, R. C. Flagan und K. J. Vahala beschreiben in Label-Free, Single-Molecule Detection with Optical Microcavities, Science 317, S. 783-86, 2007, den markerfreien Nachweis von einzelnen Molekülen, die auf der Oberfläche eines Mikroresonators aufgebracht sind. Als Mikroresonator dient ein Toroid, der im Vergleich zu üblichen Resonatorgeometrien wie Scheiben oder Kugeln einen hohen Gütefaktor (Q-Faktor) besitzt. Der Toroid besteht aus Siliziumdioxid (SiO₂) und steht auf einem Fuß aus Silizium (Si), der sich auf einem Substrat befindet, das ebenfalls aus Si besteht.

D. K. Armani, T. J. Kippenberg, S. M. Spillane und K. J. Vahala beschreiben in Ultra-high-Q toroid microcavity on a chip, Nature 421, S. 925-28, 2003, die Ankopplung von Laserlicht an einzelne Mikroresonatoren durch ausgedünnte Glasfasern. Allerdings lässt sich damit die Ankopplung an mehr als zwei Mikroresonatoren nur schwer realisieren. Ursache hierfür ist der ausgedünnte Bereich der Glasfaser, der für die Ankopplung eingesetzt wird. Aufgrund des geringen Durchmessers der Glasfaser (ca. 1-2 µm) ist diese sehr empfindlich gegenüber mechanischer Belastung und der ausgedünnte Bereich ist bedingt durch die Herstellung nicht vollständig gerade. Somit ist es schwierig, den ausgedünnten Bereich der Glasfaser parallel zum Substrat auszurichten, ohne das Substrat zu berühren. Außerdem erfolgt innerhalb von 2-3 Tagen eine Degradation der Glasfaser. waveguides for self-aligned fibre array coupling using flip-chip Si V-groove technique, Electronics Letters 32, S. 1916-1917, 1996, das so genannte *Flip-Chip-Prinzip* zur Stirnkopplung einer Glasfaser an Wellenleiter dar.

Q. Liu, K. S. Chiang und K. P. Lor zeigen in Long-period gratings in polymer ridge waveguides, Optics Express 13, S. 1150-60, 2005, die Vorteile von polymeren Rippenwellenleitern gegenüber Rippenwellenleitern aus Glas oder aus Kristallen wie Lithiumniobat (LiNbO₃) oder Silizium auf.

In J. Laine, Design and Applications of Optical Microsphere Resonators, Dissertation, Helsinki University of Technology, S. 20-21, 2003, ist schematisch die Annäherung eines ersten Substrats, das einen Wellenleiter enthält, mittels des *Flip-Chip-Prinzip* an zwei Mikrosphären, die auf ein zweites Substrat aufgebracht sind, dargestellt. Über die relative Positionierung der beiden Substrate wird keine Aussage getätigt.

US2005/0162656 offenbart ein mikrooptisches Bauelement (60) zur Ankopplung von Laserlicht an einen Mikroresonator (62), das die folgenden Bestandteile besitzt:- zwei Wellenleitern (58, 68) zur Führung von Laserlicht, ein Mikroresonator, der die Form eines sich auf einem Fuß befindlichen rotationssymmetrischen Körpers aufweist, ein erstes Substrat (Fig. 10-11), auf dem sich der Mikroresonator und die Wellenleitern befinden und das auf zwei Seiten mit ersten Seitenwänden (70) versehen ist, ein zweites Substrat (78), wobei die ersten Seitenwände (70) und die zwei Substraten einen mikrofluidischen Kanal (72) ausbilden, worin sich einer Oberfläche des Mikroresonators befindet.

Die WO 2005/019798 A2 beschreibt ein mikrooptisches Bauelement zur Ankopplung von Laserlicht an Mikroresonatoren, das zwei Wellenleiter zur Führung von Laserlicht, einen Mikroresonator, der die Form eines sich auf einem Fuß befindlichen rotationssymmetrischen Körpers aufweist, ein erstes Substrat, auf dem sich der Mikroresonator befindet und das auf zwei Seiten mit ersten Seitenwänden versehen ist, und ein zweites Substrat, auf dem sich der mindestens eine Wellenleiter zur optischen Ankopplung des Laserlichts an den Mikroresonator befindet und das auf zwei Seiten mit zweiten Seitenwänden versehen ist, besitzt, wobei die ersten Seitenwände und die zweiten Seitenwände über das erste Substrat miteinander verbunden sind.

Ausgehend hiervon ist es die Aufgabe der vorliegenden Erfindung, ein mikrooptisches Bauelement zur Ankopplung von Laserlicht an Mikroresonatoren und ein Verfahren zu seiner Herstellung vorzuschlagen, die die vorher genannten Nachteile und Einschränkungen nicht aufweisen.

Insbesondere soll eine Vorrichtung bereitgestellt werden, die die Ankopplung von Laserlicht aus mindestens einem Wellenleiter an mehrere, vorzugsweise toroide Mikroresonatoren ermöglicht, wobei der mindestens eine Wellenleiter parallel zum Substrat mit den Mikroresonatoren ausgerichtet ist.

Weiterhin soll eine Vorrichtung vorgeschlagen werden, die Mittel zur einfachen und definierten Zuführung einer nachzuweisenden Substanz in die Nachweiszone, in der sich die Mikroresonatoren befinden, bereitstellt.

Schließlich soll ein Verfahren angegeben werden, mit dem sich der mindestens eine Wellenleiter, die mehreren Mikroresonatoren und die Mittel zur Zuführung der nachzuweisenden Substanz auf möglichst einfache Weise herstellen lassen.

Diese Aufgabe wird gelöst im Hinblick auf das Bauelement durch die Merkmale des Anspruchs 1 und im Hinblick auf das Herstellungsverfahren durch die Schritte des Anspruchs 8. Die Unteransprüche beschreiben jeweils vorteilhafte Ausgestaltungen.

Ein erfindungsgemäßes mikrooptisches Bauelement zur Ankopplung von Laserlicht an Mikroresonatoren besitzt zumindest die folgenden Bestandteile:
- mindestens einen Wellenleiter, bevorzugt einen oder zwei Wellenleiter zur Führung von Laserlicht,
- mindestens zwei Mikroresonatoren, die jeweils die Form eines sich auf einem Fuß befindlichen rotationssymmetrischen Körpers, bevorzugt eines Toroids oder Sphäroids (Rotationsellipsoid), der auch gebogen oder konisch ausgestaltet sein kann, aufweisen,

- ein erstes Substrat, auf dem sich die mindestens zwei Mikroresonatoren befinden und das auf zwei Seiten mit ersten Seitenwänden versehen ist,
- ein zweites, bevorzugt transparentes Substrat, auf dem sich der mindestens eine Wellenleiter befindet und das auf zwei Seiten mit zweiten Seitenwänden versehen ist,

Erfindungsgemäß sind die ersten Seitenwände und die zweiten Seitenwände mechanisch fest miteinander verbunden.

Der mindestens eine Wellenleiter, der zur Führung von Laserlicht geeignet ist, ist bevorzugt ein Rippenwellenleiter. Gemäß Liu et al. eignet sich hierzu vorzugsweise ein polymerer Rippenwellenleiter, insbesondere ein Rippenwellenleiter aus Polymethylmethacrylat (PMMA).

Die mindestens zwei Mikroresonatoren weisen gemäß D. K. Armani et al. jeweils die Form eines sich auf einem Fuß befindlichen Sphäroids oder Toroids auf.

Die optische Ankopplung des Laserlichts an die mindestens zwei Mikroresonatoren wird durch den mindestens einen Wellenleiter hergestellt, der sich auf dem zweiten Substrat befindet. Die Ankopplung des Laserlichts erfolgt hierbei nach dem so genannten *Flip-Chip-Prinzip*: Das Substrat mit dem mindestens einen Wellenleiter liegt umgedreht und von oben angenähert an den mindestens zwei Mikroresonatoren.

Nimmt der laterale Abstand zwischen dem mindestens einen Wellenleiter und den mindestens zwei Mikroresonatoren einen Wert im Bereich der Wellenlänge des Lichtes, bevorzugt von 400 nm bis 3000 nm, an, koppelt das Laserlicht durch das seitliche evaneszente Feld des mindesten einen Wellenleiters in die mindestens zwei Mikroresonatoren ein. Der vertikale Abstand der beiden Substrate ist vorzugsweise so eingestellt, dass der Überlapp der Wellenleitermode und Mikroresonatormode maximal ist, wodurch die gewünschte optische Ankopplung des Laserlichts an die mindestens zwei Mikroresonatoren optimiert ist.

Mit der vorliegenden Erfindung wird somit der mindestens eine Wellenleiter parallel zum ersten Substrat, worauf sich die mindestens zwei Mikroresonatoren befinden, ausgerichtet, ohne dass dieser die Mikroresonatoren oder das erste Substrat berührt. Diese Eigenschaft der vorliegenden Erfindung stellt die Voraussetzung für die gleichzeitige optische Ankopplung von Laserlicht an mindestens zwei Mikroresonatoren dar.

In einer bevorzugten Ausgestaltung wird für das zweite Substrat ein transparentes Material, vorzugsweise Quarzglas oder PMMA ausgewählt, das darüber hinaus einen kleineren Brechungsindex als der mindestens eine Wellenleiter aufweist, so dass das Licht mittels Totalreflexion im mindestens einen Wellenleiter geführt werden kann.

In einer besonderen Ausgestaltung sind zwei Wellenleiter vorgesehen, zwischen denen die mindestens zwei Mikroresonatoren angeordnet sind. Durch Platzierung eines zweiten Wellenleiters neben den mindestens zwei Mikroresonatoren eignet sich das Bauelement als schmalbandiges Add-/Drop-Filter in der optischen Telekommunikation, insbesondere um ausgewählte Frequenzen durch die mindestens zwei Mikroresonatoren zu filtern und in den zweiten Wellenleiter einzukoppeln.

Erfindungsgemäß sind die ersten Seitenwände und die zweiten Seitenwände fest miteinander verbunden und müssen daher nicht relativ zueinander gehalten werden. Durch diese Befestigung ist auch eine passive Justage möglich. Vorzugsweise bestehen die beiden Seitenwände aus Silizium oder einem transparenten Material, bevorzugt Quarzglas oder einem Polymer.

In einer besonders bevorzugten Ausgestaltung bilden die beiden Seitenwände zusammen mit beiden Substraten einen geschlossenen mikrofluidischen Kanal. Diese Anordnung ist im Hinblick auf die Verwendung der mindestens zwei Mikroresonatoren als Detektoren vorzugsweise dazu geeignet, um eine zu detektierende Substanz von außen mittels der im mikrofluidischen Kanal auftretenden Kapillarkräfte definiert in eine Nachweiszone im mikrofluidischen Kanal zu leiten.

Ein erfindungsgemäßes mikrooptisches Bauelement lässt sich insbesondere mit dem folgenden Verfahren herstellen.

Zur Herstellung der Mikrotoroide wird zunächst das erste Substrat mit einem Photoresist, der als Ätzmaske dient, belackt. Durch Belichtung und Entwicklung des Resists und anschließendes Aufschmelzen wird das Substrat derart strukturiert, dass mindestens zwei Mikroresonatoren, die jeweils in Form eines sich auf einem Fuß befindlichen rotationssymmetrischen Körpers ausgestaltet sind, ausgebildet werden.

Zur Herstellung des mindestens einen Wellenleiters wird zunächst eine Schicht aus einem geeigneten Material auf das zweite Substrat aufgeschleudert. Nach entsprechender Belichtung und Entwicklung erfolgt eine Vereinzelung des mindestens einen Wellenleiters. Vorzugsweise wird auf diese Weise ein Rippenwellenleiter hergestellt.

Erfindungsgemäß wird dann der mindestens eine Wellenleiter, der sich auf dem zweiten Substrat befindet, durch Umdrehen des zweiten Substrates gemäß dem *Flip-Chip-Prinzip* den mindestens zwei Mikroresonatoren angenähert. Für die Annäherung ist es vorteilhaft, dass das zweite Substrat transparent ist, um eine Justierung mittels eines Mikroskops vornehmen zu können.

In einer bevorzugten Ausgestaltung werden die beiden Substrate dadurch fest miteinander verbunden, indem die Strukturierung der beiden Seitenwände jeweils in das Herstellungsverfahren eine jeden der beiden Substrate integriert ist. Diese Art der Ausgestaltung ist ein wesentlicher Vorteil gegenüber der sonst üblichen und aufwendigen Bonding-Technik.

Erfindungsgemäß wird der mikrofluidische Kanal durch eine geeignete Verfahrensführung bei der Herstellung beider Substrate geformt, die vor der Flip-*Chip-Annäherung* durchgeführt wird. Anschließend werden die beiden Substrate fest miteinander verbunden.

In einer alternativen Ausgestaltung wird der mikrofluidische Kanal durch den Einsatz eines zusätzlichen Materials, insbesondere von Klebstoff, der vorzugsweise Epoxidharz enthält, oder von Klebefolie, nach dem *Flip-Chip-Prozess* gebildet.

Der wesentliche Vorteil eines erfindungsgemäßen mikrooptischen Bauelements liegt darin, dass die beiden Substrate fest miteinander verbunden sind und daher nicht relativ zueinander gehalten werden müssen. Diese Art der Befestigung ermöglicht es, auf einfache Weise einen mikrofluidischen Kanal zu realisieren und außerdem eine passive Justage durchzuführen.

Im Gegensatz zur Glasfaser-Technik ist der mindestens eine Wellenleiter gerade und robust und lässt sich somit gleichzeitig an mehrere Mikroresonatoren parallel ankoppeln.

Die Erfindung wird im Folgenden anhand von Ausführungsbeispielen mit Hilfe der Figur näher erläutert.

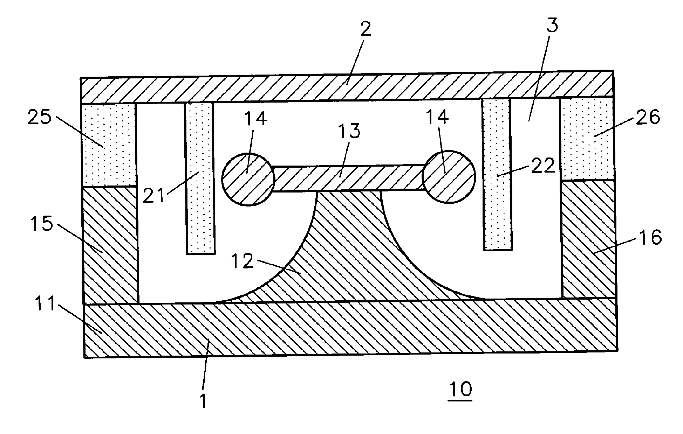

**Fig. 1** zeigt schematisch den Aufbau eines erfindungsgemäßen mikrooptischen Bauelements **10.** Ein Toroid **14** aus SiO₂ ist mittels einer Scheibe **13** auf einem Fuß **12** aus Silizium aufgebracht, wobei der Fuß **12** fest mit dem ersten Substrat **1,** das ebenfalls aus Silizium besteht, fest verbunden ist. Weiterhin sind am ersten Substrat **1** zwei Seitenwände **15, 16** angebracht. Auf dem zweiten Substrat **2** aus Quarzglas befinden sich zwei Rippenwellenleiter **21, 22** aus PMMA. Außerdem ist das zweite Substrat **2** mit zwei Seitenwänden **25, 26** versehen.

Zur Herstellung der als Mikrotoroide ausgestalteten Mikroresonatoren wurde zunächst ein oxidierter Silizium-Wafer mit einem Photoresist belackt. Anschließend wurde der Resist mittels Elektronenstrahl-Lithographie belichtet und entwickelt. Der strukturierte Photolack diente im nächsten Schritt als Ätzmaske, wobei das Glas mit gepufferter Flusssäure strukturiert wurde. Der Photolack wurde im folgenden Schritt mit Aceton entfernt. Danach wurden die erhaltenen Scheiben mit Xenondifluorid unterätzt, um im letzten Schritt mit Hilfe eines CO₂-Lasers aufgeschmolzen zu werden.

Alternativ wurde zunächst ein oxidierter Silizium-Wafer mit einem Photoresist belackt, der anschließend mittels Elektronenstrahl-Lithographie belichtet und entwickelt wurde. Dann wurden die erhaltenen Scheiben mit Xenondifluorid unterätzt, um schließlich mittels einer heißen Platte aufgeschmolzen zu werden.

Gleichzeitig mit der Herstellung der Mikrotoroide wurde das erste Substrat **1** mit zwei Seitenwänden **15, 16** versehen.

Die Herstellung der Rippenwellenleiter aus PMMA erfolgte auf einem Quarzglas-Substrat, auf das eine Schicht aus PMMA aufgeschleudert und das Lösungsmittel in einem anschließenden Backschritt ausgetrieben wurde. Anschließend wurden die beiden Wellenleiter.mittels UV-Lithographie mit einer Chrom/ Quarz-Maske belichtet. In einem zweiten Belichtungsschritt wurden die lithographischen Kanten der beiden Wellenleiter definiert.

Im Anschluss erfolgte die Entwicklung der Wellenleiter mittels einer Entwicklerlösung, die aus Methylisobutylketon (MIBK) und Isopropanol (IPA) im Mischungsverhältnis 1:1 besteht. Alternativ wurde ein sog. *GG-Entwickler,* bestehend aus 20% de-ionisiertem Wasser, 60% 2-(2-butoxyethoxy) Ethanol, 15% Tetra-hydro-1-4-oxazine und 5% 2-Aminoethanol, und ein *BDG-Stopper,* bestehend aus 20% de-ionisiertem Wasser, 80% 2-(2-butoxyethoxy) Ethanol eingesetzt.

Im letzten Schritt wurden die Wellenleiter mit einer Wafersäge vereinzelt, wobei der Sägeschnitt in einem Abstand von ca. 20 µm von der Wellenleiterkante erfolgte. Auch hier wurde das zweite Substrat **2** gleichzeitig mit der Herstellung der Rippenwellenleiter **21, 22** mit zwei Seitenwänden **25, 26** ausgestattet.

Erfindungsgemäß wurden dann die Rippenwellenleiter **21, 22,** die sich auf dem zweiten Substrat **2** befinden, durch Umdrehen des zweiten Substrats **2** gemäß dem *Flip-Chip-Prinzip* den mehreren Mikroresonatoren, die sich auf dem ersten Substrat **1** befanden, angenähert. Der vertikale Abstand der beiden Substrate wurde dabei so eingestellt, dass der Überlapp der Wellenleitermode und der Mikroresonatormode maximal wurde. Auf diese Weise wurde die optische Ankopplung des Laserlichts an die mindestens zwei Mikroresonatoren möglichst optimal eingestellt.

Gleichzeitig mit dieser Annäherung wurden die beiden Seitenwände **25, 26** des zweiten Substrats **2** den beiden Seitenwänden **15, 16** des ersten Substrats **1** so angenähert, dass diese, wie in **Fig. 1** dargestellt, fest miteinander verbunden wurden. Damit wurde zusammen mit dem ersten Substrat **1** und dem zweiten Substrat **2** der mikrofluidische Kanal **3** ausgebildet.

## Patentansprüche

1. Mikrooptisches Bauelement (10) zur Ankopplung von Laserlicht an Mikroresonatoren, das die folgenden Bestandteile besitzt:
- mindestens einen Wellenleiter (21) zur Führung von Laserlicht,
- mindestens zwei Mikroresonatoren, die jeweils die Form eines sich auf einem Fuß (12) befindlichen rotationssymmetrischen Körpers aufweisen,
- ein erstes Substrat (1), auf dem sich die mindestens zwei Mikroresonatoren befinden und das auf zwei Seiten mit ersten Seitenwänden (15, 16) versehen ist,
- ein zweites Substrat (2), auf dem sich der mindestens eine Wellenleiter (21) zur optischen Ankopplung des Laserlichts an die mindestens zwei Mikroresonatoren befindet und das auf zwei Seiten mit zweiten Seitenwänden (25, 26) versehen ist,
wobei die ersten Seitenwände (15, 16) und die zweiten Seitenwände (15, 16) derart miteinander verbunden sind, dass sie zusammen mit dem ersten Substrat (1) und dem zweiten Substrat (2) einen mikrofluidischen Kanal (3) ausbilden, worin sich der mindestens eine Wellenleiter (21) und die mindestens zwei Mikroresonatoren befinden.

2. Mikrooptisches Bauelement nach Anspruch 1, **dadurch gekennzeichnet, dass** die beiden Seitenwände aus Silizium, Quarzglas oder einem transparenten Polymer bestehen.

3. Mikrooptisches Bauelement nach Anspruch 1 oder 2, **dadurch gekennzeichnet, dass** das zweite Substrat (2) transparent ist und einen kleineren Brechungsindex als der mindestens seine Wellenleiter (21) aufweist.

4. Mikrooptisches Bauelement nach einem der Ansprüche 1 bis 3, **dadurch gekennzeichnet, dass** der mindestens eine Wellenleiter (21) als polymerer Rippenwellenleiter ausgebildet ist.

5. Mikrooptisches Bauelement nach einem der Ansprüche 1 bis 4, **dadurch gekennzeichnet, dass** zwei zur Einkopplung von Laserlicht geeignete Wellenleiter (21, 22) vorgesehen sind, zwischen denen die mindestens zwei Mikroresonatoren angeordnet sind.

6. Mikrooptisches Bauelement nach einem der Ansprüche 1 bis 5, **dadurch gekennzeichnet, dass** der laterale Abstand zwischen dem mindestens einen Wellenleiter (21) und den mindestens zwei Mikroresonatoren von 400 nm bis 3000 nm beträgt.

7. Mikrooptisches Bauelement nach einem der Ansprüche 1 bis 6, **dadurch gekennzeichnet, dass** die mindestens zwei Mikroresonatoren jeweils in Form eines sich auf einem Fuß (12) befindlichen Toroids (14) oder Sphäroids ausgestaltet sind.

8. Verfahren zur Herstellung eines mikrooptischen Bauelements (10) nach einem der Ansprüche 1 bis 7, **dadurch gekennzeichnet, dass** der mindestens eine Wellenleiter (21), der sich auf dem zweiten Substrat (2) befindet, durch Umdrehen des zweiten Substrates (2) den mindestens zwei Mikroresonatoren, die sich auf dem ersten Substrat (1) befinden, derart angenähert wird, dass sich gleichzeitig die beiden Seitenwände (25, 26) des zweiten Substrats (2) den beiden Seitenwänden (15, 16) des ersten Substrats (1) so annähern, dass sie derart fest miteinander verbunden werden, dass sie zusammen mit dem ersten Substrat (1) und dem zweiten Substrat (2) einen mikrofluidischen Kanal (3) ausbilden, worin sich der mindestens eine Wellenleiter (21) und die mindestens zwei Mikroresonatoren befinden.

## Claims

1. Micro-optical construction element (10) for coupling laser light to micro resonators, which comprises the following components:
- at least one wave guide (21) to guide laser light,
- at least two micro resonators, which are each in the form of a rotationally symmetrical body located on a foot (12),
- a first substrate (1), on which the at least two micro resonators are located and which is fitted on two sides with first side panels (15, 16),
- a second substrate (2), on which the at least one wave guide (21) for the optical connection of the laser light to the at least two micro resonators is located and which is fitted on two sides with second side panels (25, 26),
wherein the first side panels (15, 16) and the second side panels (15, 16) are connected to each other in such a way that they form, together with the first substrate (1) and the second substrate (2), a micro-fluid channel (3), in which the at least one wave guide (21) and the at least two micro resonators are located.

2. Micro-optical construction element according to claim 1, **characterised in that** the two side panels are made of silicon, quartz glass or a transparent polymer.

3. Micro-optical construction element according to claim 1 or 2, **characterised in that** the second substrate (2) is transparent and has a lower refraction index than the at least one wave guide (21).

4. Micro-optical construction element according to any one of claims 1 to 3, **characterised in that** the at least one wave guide (21) is made as a polymer ribbed wave guide.

5. Micro-optical construction element according to any one of claims 1 to 4, **characterised in that** two wave guides (21, 22) suitable for coupling laser light are provided, between which the at least two micro resonators are arranged.

6. Micro-optical construction element according to any one of claims 1 to 5, **characterised in that** the lateral distance between the at least one wave guide (21) and the at least two micro resonators is from 400 nm to 3000 nm.

7. Micro-optical construction element according to any one of claims 1 to 6, **characterised in that** the at least two micro resonators, each made in the form of a toroid (14) or spheroid on a foot (12).

8. Method for making a micro-optical construction element (10) according to any one of claims 1 to 7, **characterised in that** the at least one wave guide (21) which is located on the second substrate (2), is brought, by turning the second substrate (2), closer to the at least two micro resonators which are located on the first substrate, in such a manner that the two side panels (25, 26) of the second substrate (2) are at the same time brought closer to the two side panels (15, 16) of the first substrate (1), so that they are connected firmly to each other in such a manner that they form, together with the first substrate (1) and the second substrate (2), a micro-fluid channel (3), in which the at least one wave guide (21) and the at least two micro resonators are located.

## Revendications

1. Composant micro-optique (10) pour permettre de coupler de la lumière laser sur des micro-résonateurs, comportant les éléments suivants :
- au moins un guide d'ondes (21) permettant le guidage de la lumière laser,
- au moins deux micro-résonateurs qui présentent chacun la forme d'un corps symétrique en rotation positionné sur un pied (12),
- un premier substrat (1) sur lequel sont positionnés les deux micro-résonateurs, et qui est équipé sur deux côtés de premières parois latérales (15, 16),
- un second substrat (2) sur lequel est positionné le guide d'ondes (21) pour permettre le couplage optique de la lumière laser sur les deux micro-résonateurs et qui est équipé de deux côtés de secondes parois latérales (25, 26),
- dans lequel les premières parois latérales (15, 16) et les secondes parois latérales (25, 26) sont reliées entre elles de sorte qu'elles forment avec le premier substrat (1) et le second substrat (2) un canal micro-fluidique (3) dans lequel sont positionnés le guide d'ondes (21) et les deux micro-résonateurs.

2. Composant micro-optique conforme à la revendication 1,
**caractérisé en ce que**
les deux parois latérales sont réalisées en silicium, en verre quartzeux ou en un polymère transparent.

3. Composant micro-optique conforme à la revendication 1 ou 2,
**caractérisé en ce que**
le second substrat (2) est transparent et présente un indice de réfraction inférieur à celui du guide d'ondes (21).

4. Composant micro-optique conforme à l'une des revendications 1 à 3,
**caractérisé en ce que**
le guide d'ondes (21) est réalisé sous la forme d'un guide d'ondes à ailettes polymère.

5. Composant micro-optique conforme à l'une des revendications 1 à 4,
**caractérisé en ce qu'**
il est prévu deux guides d'ondes (21, 22) adaptés au couplage de la lumière laser, entre lesquels sont montés les deux micro-résonateurs.

6. Composant micro-optique conforme à l'une des revendications 1 à 5,
**caractérisé en ce que**
la distance latérale entre le guide d'ondes (21) et les deux micros résonateurs est de 400 nm à 3000 nm.

7. Composant micro-optique conforme à l'une des revendications 1 à 6,
**caractérisé en ce que**
les deux micros résonateurs sont respectivement réalisés sous la forme d'un toroïde (14) ou d'un sphéroïde positionné sur un pied (12).

8. Procédé d'obtention d'un composant micro-optique (10) conforme à l'une des revendications 1 à 7,
**caractérisé en ce que**
le guide d'ondes (21) qui est positionné sur le second substrat (2) s'approche par rotation du second substrat (2), des deux micro-résonateurs qui sont positionnés sur le premier substrat (1) dé sorte que, les deux parois latérales (25, 26) du second substrat (2) s'approchent simultanément des deux parois latérales (15, 16) du premier substrat (1) pour qu'elles soient reliées solidairement de façon à former avec le premier substrat (1) et le second substrat (2) un canal micro-fluidique (3) dans lequel sont positionnés le guide d'ondes (21) et les deux micro-résonateurs.
